# EUROPÄISCHE PATENTSCHRIFT

(11) **EP 1 165 434 B1**
(45) Veröffentlichungstag und Bekanntmachung des Hinweises auf die Patenterteilung: **12.10.2005**
(21) Anmeldenummer: 00922445.2
(22) Anmeldetag: 22.03.2000
(51) Int. Cl.: C01B 3/00, C22C 32/00, C22C 1/10, H01M 4/24, H01M 4/38, H01M 10/34

(54) **METALLHALTIGER ELEKTRODENWERKSTOFF WENIGSTENS FÜR SEKUNDÄRELEMENTE UND VERFAHREN ZU SEINER HERSTELLUNG**
METAL-CONTAINING ELECTRODE MATERIAL USED AT LEAST IN SECONDARY CELLS AND METHOD FOR PRODUCING THE SAME
MATERIAU ELECTRODE METALLIQUE, DESTINE AU MOINS A DES ELEMENTS SECONDAIRES D'ACCUMULATEUR, ET PROCEDE DE FABRICATION ASSOCIE

(30) Priorität: 26.03.1999 DE 19915142
(43) Veröffentlichungstag der Anmeldung: 02.01.2002
(73) Patentinhaber: GKSS-Forschungszentrum Geesthacht GmbH, 21502 Geesthacht (DE); GfE Metalle und Materialien GmbH, 90431 Nürnberg (DE)
(72) Erfinder: OELERICH, Wolfgang, D-21502 Geesthacht (DE); KLASSEN, Thomas, D-21033 Hamburg (DE); BORMANN, Rüdiger Prof. Dr. rer. nat., 21224 Rosengarten (DE); GÜTHER, Volker, D-90550 Burgthann (DE); OTTO, Andreas, D-90766 Fürth (DE)
(74) Vertreter: UEXKÜLL & STOLBERG
(86) Internationale Anmeldenummer: PCT/DE2000/000866
(87) Internationale Veröffentlichungsnummer: WO 2000/058207

(56) Entgegenhaltungen:
- EP-A- 0 184 427
- EP-A- 0 840 385
- DE-A- 3 535 378

## Beschreibung

Die Erfindung betrifft einen metallhaltigen Elektrodenwerkstoff als hydridbildender Werkstoff für Primär- und Sekundärelemente und ein Verfahren zu seiner Herstellung.

Voranstehend sei darauf hingewiesen, daß hier unter dem Begriff metallhaltiger Werkstoff atomare Metalle, Metallegierungen, intermetallische Phasen von Metallen, Verbundwerkstoffe sowie entsprechende Hydride verstanden werden sollen.

Aus der EP-A-0 840 385 ist eine wasserstoffspeichernde Legierung sowie eine Elektrode bekannt, bei der die wasserstoffspeichernde Legierung verwendet wird. Diese bekannte Legierung weist als Zusätze Oxide der Metalle der Seltenen Erden bzw. Oxide der Lanthaniden auf. Ziel dieser Oxide der Seltenen Erden bzw. der Oxide der Lanthaniden soll es sein, den Elektrodengrundwerkstoff vor Oxidation und Korrosion zu schützen und eine entsprechende Oxidschutzschicht auszubilden.

Es ist bekannt, daß auf der Basis von reversiblen Metallhydriden Wasserstoff-Speicher, sogenannte Hydridspeicher, gebildet werden können. Hierbei wird durch Wärmeabgabe der Speicher geladen, d.h. Wasserstoff wird durch Chemiesorption gebunden und durch Wärmezufuhr wieder entladen. Wasserstoff-Speicher können somit hervorragende Energiespeicher für mobile und/oder stationäre Anwendungen bilden, d.h. diese würden, da bei der Entladung der Wasserstoff-Speicher keine schädlichen Emissionen frei werden, in Zukunft ein beachtliches Speicherpotential bilden.

Gut geeignet für derartige Hydridspeicher sind sogenannte nanokristalline Hydride, die sich durch eine schnelle Wasserstoffaufnahme- und Abgabekinetik auszeichnen. Allerdings ist ihre Herstellung bislang sehr aufwendig. Bisher wurden dazu zunächst durch Hochenergiemahlen aus elementaren Komponenten oder Vorlegierungen nanokristalline Legierungen hergestellt, wobei die Mahldauern sehr lang sein können. In einem abschließenden Prozeßschritt wurden diese nanokristallinen Legierungen einer unter Umständen mehrstufigen Wärmebehandlung unter hohem Wasserstoffdruck unterzogen und auf diese Weise hydriert. Für viele Legierungen ist darüber hinaus eine mehrfache Be- und Entladung von Wasserstoff notwendig, um die volle Kapazität zu erreichen.

Alternativ wurde versucht, die entsprechenden Hydride durch Mahlen unter Wasserstoffatmosphäre oder auf rein chemischem Wege zu synthetisieren. Dabei zeigte sich allerdings, daß die Ausbeute an den gewünschten Hydriden geringer ist und zum Teil zusätzliche unerwünschte Phasen auftreten.

Weiterhin waren bzw. sind bestimmte Phasen mit diesen bekannten konventionellen Methoden überhaupt nicht darstellbar.

In der DE-A-197 58 384 ist ein Verfahren zur Herstellung nanokristalliner Metallhydride beschrieben worden, mit dem eine Herstellung von stabilen und metastabilen Hydriden oder Hydriden metastabiler Legierungen möglich ist, und zwar mit einer sehr hohen Ausbeute bis in den Bereich zu 100 %. Das in der vorgenannten deutschen Patentanmeldung beschriebene Verfahren ist unter verhältnismäßig einfach beherrschbaren Randbedingungen durchführbar und mit verhältnismäßig geringer Energiezufuhr betreibbar.

Um bei einem derartigen Wasserstoff-Speicher im Bedarfsfalle sehr schnell die gespeicherte Energie zur Verfügung zu haben und den Wasserstoff-Speicher auch schnell mit Energie laden zu können, ist es erstrebenswert, die Reaktionsgeschwindigkeit bei der Hydrierung und Dehydrierung von Metallen bei niedriger Temperatur sehr hoch zu halten bzw. eine sehr hohe Reaktionsgeschwindigkeit anzustreben.

Bisher wurde dazu die Reaktionsfläche durch Verkleinerung der Korn-/Kristallidgröße der zu hydrierenden bzw. dehydrierenden Materialien soweit wie technisch möglich erhöht. Andere Maßnahmen zur Erhöhung der Reaktionsgeschwindkeit waren die Zugabe von Metall wie Nickel, Platin oder Palladium.

Der Nachteil der bisher bekannten Maßnahmen zur Erhöhung der Reaktionsgeschwindkeit bei der Hydrierung und insbesondere bei der Dehydrierung, d.h. der Bereitstellung von Wasserstoff aus dem Wasserstoff-Speicher ist der, daß diese für technische Anwendungen wie technisch nutzbare Batterien nicht ausreichen.

Für wiederaufladbare hydridbasierte Akkumulatoren, sogenannte Sekundärelemente bzw. Sekundärzellen, werden Metallhydride als Kathodenmaterial eingesetzt. Bei der Stromentnahme gibt das entsprechende Hydrid Wasserstoff ab und wandelt so in die entsprechende Metallegierung um. Das Wasserstoffatom reagiert mit einem OH⁻-Ion zu einem H₂O und einem Elektron. Beim Ladevorgang findet Hydrolyse im Elektrolyten statt, bei der ein H⁺- und ein OH⁻-Ion entstehen. Das H⁺-Ion wird durch ein Elektron aus dem Ladestrom neutralisiert und der entsprechende Wasserstoff wird wiederum von der Metallegierung bzw. dem metallhaltigen Elektrodenwerkstoff aufgenommen und in Form eines entsprechenden Hydrids gespeichert.

Die hydridbasierten Akkumulatoren werden für eine Vielzahl von Anwendungen eingesetzt, darunter auch als Ersatz konventioneller Ni-Cd Akkumulatoren.

Allgemein gilt, daß die Hydridwerkstoffe für die negative Elektrode dieser wiederaufladbaren Akkumulatoren Anforderungen erfüllen müssen:
1. Sie müssen eine hohe Wasserstoffspeicherkapazität aufweisen. Die Wasserstoffspeicherkapazität wird dabei durch die Thermodynamik bestimmt. Für die Anwendung derartiger Werkstoffe als Anodenmaterial in einem Hydrid-Akkumulator ist eine Hydridbildungsenthalpie von 8 bis 10 kcal/mol optimal. Weiterhin sollte der Gleichgewichtsdissoziationsdruck des Hydrids bei Anwendungstemperatur im Bereich zwischen 1 mbar bis zu einigen bar liegen. Diese Kriterien werden zur Zeit durch Legierungen erfüllt, die auf einer intermetallischen Verbindung vom Typ AB₅ basieren, z.B. LaNi₅, und Legierungen, die auf sogenannten Laves-Phasen vom Typ AB₂ basieren und z.B. NiTi enthalten.
2. Hohe Korrosionsbeständigkeit gegen alkalische Elektrolyten, bspw. KOH, sowie eine gute mechanische Stabilität gegenüber wiederholten Lade- und Entladevorgängen, um eine hohe Zykluszahl und damit eine lange Nutzungsdauer zu garantieren. Die Korrosionsbeständigkeit wird der Bildung eines passivierenden Films auf der Oberfläche des Werkstoffs zugeschrieben, der das Innere der Elektrode vor Korrosion durch wiederholtes Laden/Entladen schützt. Der Film darf dabei nicht zu dick sein, um die Diffusion von Wasserstoff in das und aus dem Elektrodenwerkstoff nicht zu behindern. Gute Hydridwerkstoffe sollten außerdem ihre Zusammensetzung während des Zyklierens, bspw. in Folge von Entmischungsreaktionen, nicht verändern. Die mechanische Stabilität der Elektrode wird durch die Volumenänderung bei der Absorption/Desorption von Wasserstoff sowie der Zähigkeit oder der Festigkeit des Werkstoffs bestimmt.
3. Hohe elektrokathalytische Aktivität für elektrochemische Reduktion und Oxidoktion, um die optimale Kinetik für die Ladung und Entladung zu erreichen, aus der sich eine hohe Ladüngseffektivität und Ratenfähigkeit für die Hydridelektrode ergeben.
4. Hohe Wasserstoffdiffusionsrate in das Innere des Speichermaterials, um eine Begrenzung der Ladezeit aufgrund schlechter Hydridbildungskinetik zu vermeiden. Außerdem sollte der Ohmsche Widerstand des Elektrodenwerkstoffs und aller elektrischen Zuleitungen gering sein.
5. Geringer Aufwand für die Aktivierung frisch präparierter Elektroden.
6. Hohe Energie- und Leistungsdichte.
7. Geringe Selbstentladungsrate. Die Speicherelektrode sollte während einer längeren Speicherperiode keine Kapazitätsverluste erleiden. Dieses kann z.B. dadurch erreicht werden, daß eine Speicherlegierung mit geringem Plateaudruck bei den Anwendungsbedingungen gewählt wird.
8. Geringe Kosten für die Ausgangsstoffe des Elektrodenwerkstoffs und geringe Kosten für ein Verfahren zur Herstellung derartiger Elektrodenwerkstoffe.

Für einen bestimmten Elektrodenwerkstoff ist es im allgemeinen schwierig, alle voraufgeführten Anforderungen 1 bis 8 gleichmäßig bzw. gleichwertig zu erfüllen. Im allgemeinen wird eine bestimmte Eigenschaft auf Kosten der anderen optimiert.

Obwohl die Herstellung von als Elektrodenwerkstoffe verwendbaren Metallegierungen mit nanokristalliner Mikrostruktur gelungen ist, siehe die oben erwähnte DE-A-197 58 384, zeigt sich, daß diese für einen technischen Einsatz als Elektrodenwerkstoff in hydridbasierten wiederaufladbaren Akkumulatoren in größerem Umfang sowie für Hochleistungsanwendungen die Reaktionskinetik jedoch immer noch zu träge sind und die damit erreichbare Leistungsdichte für die Akkumulatoren zu gering ist. Weiterhin sind die genannten metallischen Katalysationsmittel zu teuer und damit ihre Nutzung unwirtschaftlich.

Es ist somit Aufgabe der vorliegenden Erfindung einen metallhaltigen Werkstoff, bspw. ein Metall, eine Metallegierung, eine intermetallische Phase, Verbundwerkstoffe aus Metallen sowie entsprechende Hydride zu schaffen, mit denen die Reaktionsgeschwindigkeit beim Hydrieren und Dehydrieren so hoch ist, daß diese technisch als Elektrodenwerkstoff bzw. Elektroden wenigstens bei Sekundärelementen nutzbar sind, wobei ein Verfahren zur Herstellung metallhaltigen Werkstoffs, bspw. eines Metalls, einer Metallegierung, einer intermetallischen Phase, eines Verbundwerkstoffes aus diesen Materialien sowie entsprechender Hydride einfach und kostengünstig durchführbar sein soll, so daß derart hergestellte metallhaltige Werkstoffe in großtechnischem Maße bei hydrisierbaren Sekundärelementen eingesetzt werden können, bei denen eine technisch erforderliche hohe Reaktionsgeschwindigkeit bei der Hydrierung und Dehydrierung gewährleistet werden muß.

Gelöst wird die Aufgabe in Hinblick auf den metallhaltigen Elektrodenwerkstoff als hydridbildendem Werkstoff für Primär- und Sekundärelemente, wobei dieser zur Hydrierung oder Dehydrierung des Elektrodenwerkstoffs wenigstens ein Metalloxid als Katalysationsmittel enthält und wobei das Metall des Metalloxids Mg, Ca, Ti, V, Cr, Mn, Fe, Co; Ni, Cu, Zn, Zr, Nb, Mo, Sn, Hf, Ta und W ist und der Anteil des Metalloxids im Elektrodenwerkstoff von 1 Gew.% bis 10 Gew.% beträgt.

Dabei wurde sich erfindungsgemäß zu Nutze gemacht, daß im Vergleich zu reinen Metallen Metalloxide spröde sind, wodurch eine kleinere Korn-/Kristallidgröße und eine homogene Verteilung im erfindungsgemäßen Werkstoff erreicht wird, was zur Folge hat, daß die Reaktionskinetik gegenüber metallischen Katalysatoren erheblich erhöht wird. Ein weiterer Vorteil ist, daß Metalloxide als Katalysationsmittel regelmäßig sehr viel preisgünstiger bereitstellbar sind als Metalle bzw. Metallegierungen, so daß auch das erfindungsgemäß angestrebte Ziel einer preisgünstigen großtechnischen Bereitstellbarkeit derartiger erfindungsgemäßer Metalle erreicht wird.

Die Majoritätskomponente des erfindungsgemäßen metallhaltigen Elektrodenwerkstoffs ist regelmäßig ein Metall oder eine Legierung, die Wasserstoff aufnimmt und in Form eines Hydrides speichert, und weiterhin gute Korrosionsbeständigkeit gegen alkalische Elektrolyten aufweist. Die Minoritätskomponente ist ein Metalloxid oder enthält Metalloxide, die katalysierend auf die Majoritätskomponente im Hinblick auf die Wasserstoffaufnahme und -abgabe wirken und deren Oberfläche aktiviert.

Grundsätzlich ist das Metalloxid ein Oxid atomaren Metalls, bspw. das Oxid der Metalle Mg, Ca, Sc, Ti, V, Cr, Mn, Fe, Co, Ni, Cu, Zn, Zr, Nb, Mo, Sn, Hf, Ta, W. Gemäß einer vorteilhaften Ausgestaltung der Erfindung kann das Metalloxid aber auch aus Mischoxiden der Metalle, insbesondere der voraufgeführten Metalle, bestehen.

Gemäß einer vorteilhaften Ausführungsform der Erfindung weist der metallhaltige Elektrodenwerkstoff eine nanokristalline Struktur auf, wobei gleichermaßen auch vorteilhafterweise das Katalysationsmittel eine nanokristalline Struktur aufweisen kann. Weist der metallhaltige Elektrodenwerkstoff und/oder das Katalysationsmittel eine nanokristalline Struktur auf, so wird dadurch die Reaktionsoberfläche und somit die Reaktionsgeschwindigkeit der Hydrierung bzw. Dehydrierung des metallhaltigen Elektrodenwerkstoffs erhöht.

Das erfindungsgemäße Verfahren zur Herstellung eines metallhaltigen Elektrodenwerkstoffes als hydridbildendem Werkstoff für Primär- und Sekundärelemente, wobei ein metallhaltiger Werkstoff und/oder ein Katalysationsmittel, das wenigstens ein Metalloxid ist, und wobei das Metall des Metalloxids Mg, Ca, Ti, V, Cr, Mn, Fe, Co, Ni , Cu, Zn, Zr, Nb, Mo, Sn, Hf, Ta und W ist wird bzw. werden, zum Erhalt eines Metallpulvers derart einem mechanischen Mahlvorgang unterworfen, daß der metallhaltige Werkstoff und/oder das Katalysationsmittel eine nanokristalline Struktur erhält bzw. erhalten.

Dabei ist das Ziel ein Pulver aus beiden Komponenten zu erhalten, so daß eine optimierte Reaktionsoberfläche des metallhaltigen Eletrodenwerkstoffs sowie eine gleichmäßige Verteilung des Katalysationsmittels erreicht wird.

Der Mahlvorgang selbst kann in Abhängigkeit des metallhaltigen Elektrodenwerkstoffs und/oder des Katalysationsmittels unterschiedlich lang gewählt werden, um die optimal angestrebte Reaktionsoberfläche und optimale Verteilung des Katalysationsmittels des erfindungsgemäßen metallhaltigen Elektrodenwerkstoffs zu erreichen.

Dabei kann es vorteilhaft sein, daß der metallhaltige Elektrodenwerkstoff selbst zunächst dem Mahlvorgang unterworfen wird und nachfolgend ebenfalls das Katalysationsmittel zugegeben und dem weiteren Mahlvorgang unterworfen wird, es kann aber auch vorteilhafterweise umgekehrt verfahren werden, d.h. daß zunächst das Katalysationsmittel dem Mahlvorgang unterworfen wird und nachfolgend ebenfalls der metallhaltige Elektrodenwerkstoff. Auch diese jeweils unterschiedlich möglichen Vorgehensweisen beim Mahlvorgang werden in Abhängigkeit des metallhaltigen Elektrodenwerkstoffs und in Abhängigkeit des zuzusetzenden Katalysationsmittels gewählt werden.

Um zu verhindern, daß Reaktionen mit dem Umgebungsgas während des Mahlvorganges des metallhaltigen Elektrodenwerkstoffs (Metall, Metallegierung, intermetallische Phase, Verbundwerkstoff sowie deren Hydride) vonstatten gehen, wird das Verfahren vorzugsweise derart ausgeführt, daß der Mahlvorgang unter einer Inertgasatmosphäre durchgeführt wird, wobei das Inertgas vorzugsweise Argon ist.

Wie schon erwähnt, ist die Dauer des Mahlvorganges für den metallhaltigen Elektrodenwerkstoff (Metall, Metallegierung, intermetallische Phase, Verbundwerkstoff sowie deren Hydride) und/oder des Katalysationsmittels in Abhängigkeit des metallhaltigen Elektrodenwerkstoffs und/oder des gewählten Katalysationsmittels variabel wählbar. Vorzugsweise liegt die Dauer des Mahlvorganges im Bereich von etwa 1 bis 200 Stunden.

Bei einer weiteren Art des Verfahrens zur Herstellung eines metallhaltigen Elektrodenwerkstoffs als hydridbildenden Werkstoff für Primär- und Sekundärelemente wird wenigstens ein Metalloxid wenigstens auf der Oberfläche des Elektrodenwerkstoffs in situ durch Kontakt mit Sauerstoff aus Elementen des Elektrodenwerkstoffs oder durch direkte Zufuhr von Sauerstoff gebildet. Auch auf diese Weise kann somit ein katalysierendes Oxid in situ aus Elementen des Hydridspeicherwerkstoffs gebildet werden.

Vorteilhafterweise wird bei der Ausführung des Verfahrens die Oberfläche des Elektrodenwerkstoffs vor Ausbildung des Oxids entweder chemisch und/oder mechanisch aktiviert, wodurch die Oxidbildung des Metalls nochmals verbessert werden kann.

Die Erfindung wird nun unter Bezugnahme auf verschiedene Diagramme, die das Hydrierungs- und Dehydrierungsverhalten sowie andere wichtige Parameter zeigen, im einzelnen beschrieben. Darin zeigen:
- Fig. 1: ein Röntgenbeugungsdiagramm nach einer Mahldauer des metallhaltigen Elektrodenwerkstoffs von einer Stunde und 200 Stunden,
- Fig. 2a: eine Darstellung des Sorptionsverhaltens des metallhaltigen Elektrodenwerkstoffs zur Darstellung der Ladetemperatur und Ladegeschwindigkeit mit Wasserstoff,
- Fig. 2b: das Sorptionsverhalten des metallhaltigen Elektrodenwerkstoffs bei einer anderen Temperatur in Abhängigkeit von der Ladezeit,
- Fig. 2c: einen Druckverlauf bei Magnesium-Wasserstoff zur Darstellung eines maximalen Wasserstoffgehalts des metallhaltigen Elektrodenwerkstoffs,
- Fig. 3: Röntgenbeugungsbilder, aus denen im hydrierten wie im dehydrierten Zustand das Katalysationsmittel Cr₂O₃ aber auch Spuren von MgO und Cr sichtbar und,
- Fig. 4a - 4d: eine Darstellung der erfindungsgemäß möglichen Verbesserung der Kinetik sowohl bei der Absorption von Wasserstoff wie auch bei dessen Desorption,
- Fig. 5: einen typischen Verlauf einer in den ersten 30 Lade- und Entladezyklen erzielten Ladekapazitäten einer unbehandelten AB₅ Hydridlegierung,
- Fig. 6: die Darstellung einer Aktivierung nach den ersten 5 Zyklen zur Sichtbarmachung einer nur unzureichenden Aktivierung,
- Fig. 7: einen entsprechenden Kurvenverlauf gemäß Fig. 5 mit einem Metalloxid gemäß der Erfindung katalysiert,
- Fig. 8: einen entsprechenden Kurvenverlauf gemäß Fig. 6 mit einem Metalloxid gemäß der Erfindung katalysiert,
- Fig. 9: den Verlauf der mit einer unbehandelten Legierung im 10. Zyklus erzielbaren Entladekapazitäten als Funktion der angelegten Entladeströme (bezogen auf 1g Legierung),
- Fig. 10: eine Darstellung, wie gemäß Fig. 9, jedoch im 30. Zyklus,
- Fig. 11: einen entsprechenden Kurvenverlauf derselben Legierung wie in Fig. 9, jedoch mit einem Metalloxid gemäß der Erfindung katalysiert, und
- Fig. 12: einen entsprechenden Kurvenverlauf derselben Legierung wie Fig. 10, jedoch mit einem Metalloxid gemäß der Erfindung katalysiert.

Der metallhaltige Elektrodenwerkstoff der Erfindung kann die verschiedensten Metalle, Metallegierungen, intermetallische Phasen, Verbundwerkstoffe und entsprechende Hydride umfassen. Diese bilden das Speichermaterial der erfindungsgemäßen Wasserstoff-Speicher. Zur Beschleunigung der Hydrierung oder Dehydrierung werden diesen metallhaltigen Elektrodenwerkstoffen als Katalysationsmittel Metalloxide zugesetzt, wobei das Metalloxid auch ein Mischoxid sein kann, d.h. mehrere Metalloxide enthalten kann. Metalloxide bzw. Mischoxide können beispielsweise aus Mg, Al, Si, Ca, Sc, Ti, V, Cr, Mn, Fe, Co, Ni, Cu, Zn, Y, Zr, Nb, Mo, Sn, Ce, La, Hf, Ta, W oder aus Seltenen Erden bestehen. Die vorangehende Aufzählung ist allerdings nicht so zu verstehen, daß diese eine Beschränkung der erfindungsgemäßen Metalloxide auf Oxide dieser Metalle sein soll. Oxide von Metallen können beispielsweise Al₂O₃, SiO₂, TiO₂, V₂O₅, Cr₂O₃, Fe₂O₃, Fe₃O₄, CuO, Nb₂O₅, MoO, MoO₂, usw... sein. Das Katalysationsmittel kann auch eine nanokristalline Struktur aufweisen.

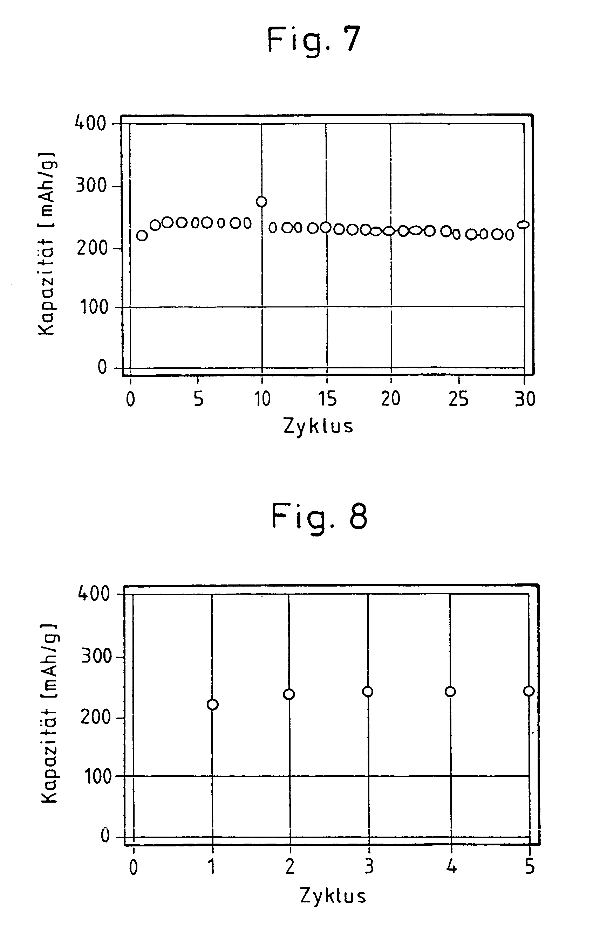

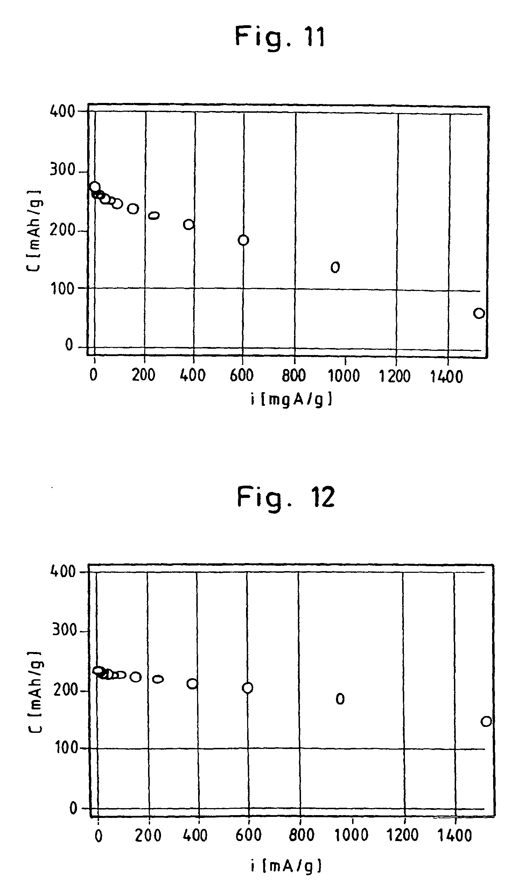

Ein Verfahren zur Herstellung eines erfindungsgemäßen metallhaltigen Elektrodenwerkstoffs wird nachfolgend anhand eines Beispieles beschrieben. Bevor allerdings auf das Beispiel im einzelnen eingegangen wird, kann allgemein gesagt werden, daß ein metallhaltiger Elektrodenwerkstoff gemäß der Erfindung (Standard-Hydridlegierung) beispielsweise auf eine Partikelgröße von 500 µm und 50 µm vorgemahlen wird. Das Mahlgut wird mit einem Anteil von 1 % bis 10 % eines Metalloxides gemäß der Erfindung vorgemischt. Die Mischung wird in einer Planetenkugelmühle 10 Minuten unter Argonatmosphäre vermahlen. Das enthaltene Pulver wird direkt zu den Elektroden verarbeitet, welche dann die in den Figuren 7, 8, 11 und 12 gezeigten elektro-chemischen Eigenschaften aufweisen.

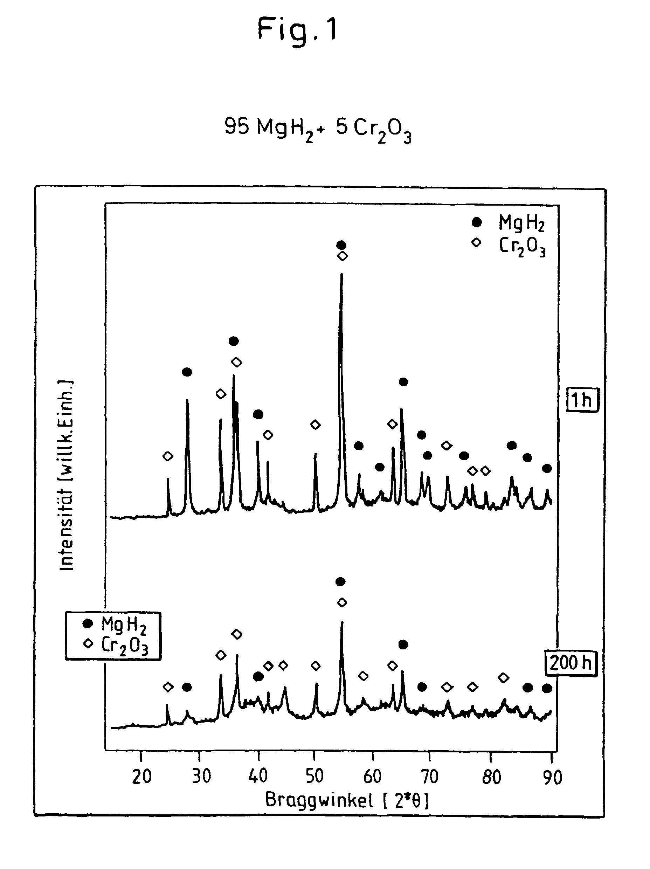

Bezüglich der Herstellung des metallhaltigen Elektrodenwerktoffs wird zunächst auf die Figuren 1 bis 4d unmittelbar Bezug genommen.

### Beispiel

### MgH₂ + 5 Cr₂O₃

Experimentelle Einzelheiten: 30,7 g MgH₂ und 9,3 g Cr₂O₃ wurden in einem Molverhältnis von 19:1 in einem 250ml-Mahlbecher aus Stahl gegeben. Hinzugefügt wurden 400 g Stahlkugeln (Kugeldurchmesser 10 mm, Verhältnis Pulver : Kugeln = 1:10). Das Pulver wurde einem mechanischen Hochenergiemahlprozeß in einer Planetenkugelmühle vom Typ Fritsch Pulverisette 5 unterzogen. Der Mahlvorgang wurde unter einer Argonatatmosphäre für insgesamt 200 Stunden durchgeführt. Während und nach dem Mahlvorgang wurden geringe Mengen an Pulver für eine Röntgenstrukturanalyse entnommen. Fig. 1 zeigt die Röntgenbeugungsdiagramme nach einer Mahldauer von 1h und 200h. Neben dem MgH₂ ist auch nach 200h das Cr₂O₃ mittels Röntgenstrukturanalyse nachweisbar.

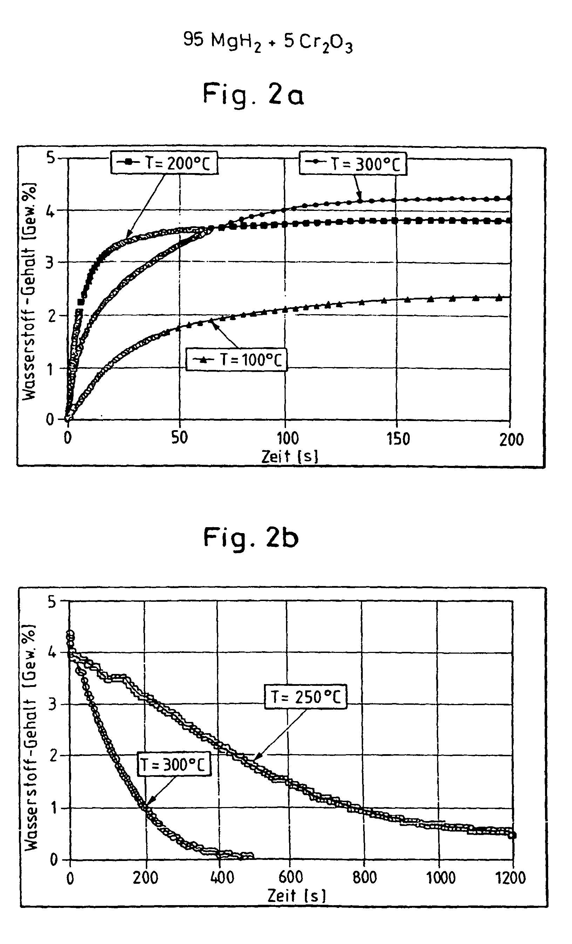

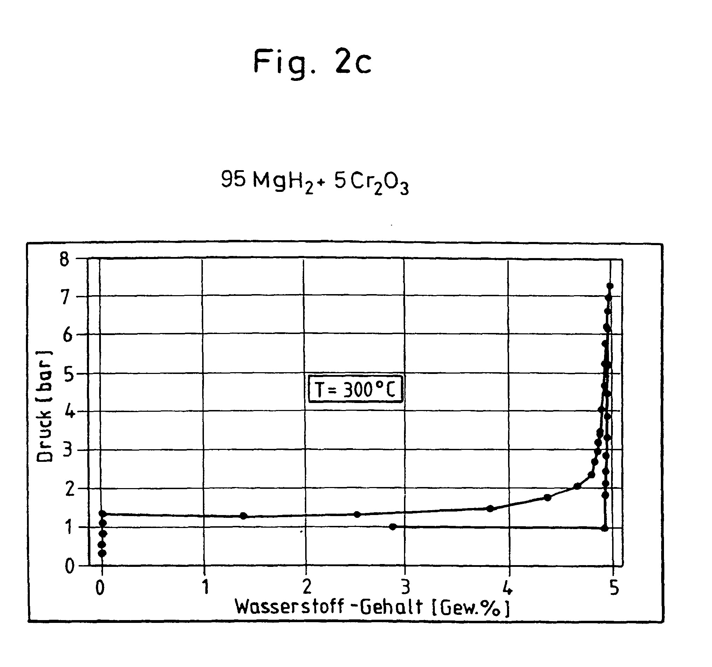

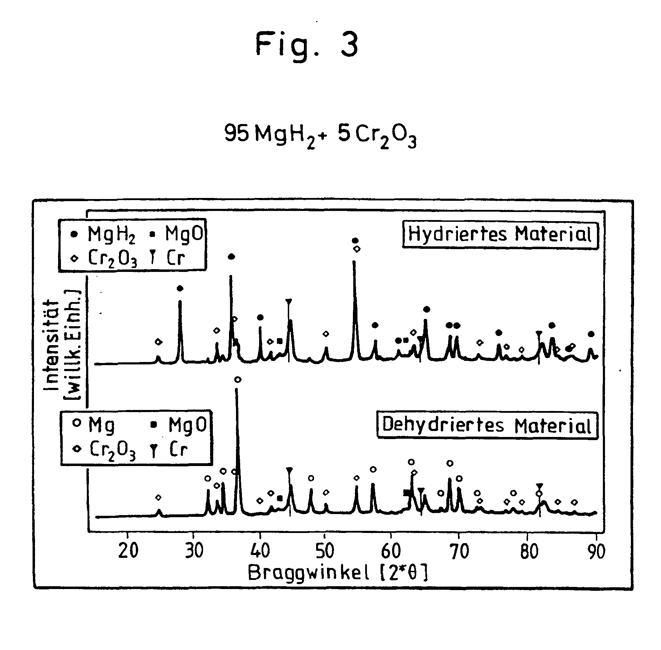

Sorptionsverhalten: Gemäß Fig. 2a kann das Material bei einer Temperatur von 300°C innerhalb von 100 s mit 4 gew. % Wasserstoff beladen werden. Bei T=250°C wird ein Wasserstoffgehalt von ca. 3,6 gew. % bereits nach ca. 50 s erreicht. Auch bei T=100°C ist eine schnelle Beladung möglich. Eine vollständige Wasserstoff-Entladung ist bei T=300°C nach ca. 400 s möglich. Bei T=250°C hingegen nach ca. 1200 s (vergleiche Fig. 2b). Auf dem PCT-Diagramm (Fig. 2c) ist neben dem Druckplateau von 1,6 bar, das dem System Magnesium-Wasserstoff zugeordnet werden kann, ein maximaler Wasserstoffgehalt des Materials von 5 gew. % zu erkennen. Auf Fig. 3 sind Röntgenbeugungsbilder dargestellt, auf denen im hydrierten wie dehydrierten Zustand neben Cr₂O₃ auch Spuren von MgO und eventuell Cr als inaktive Phase zu finden ist. Desweiteren sind MgH₂ im hydrierten und Mg im dehydrierten Zustand nachweisbar.

### Vergleich von Magnesium + Chromoxid zu reinem Magnesium:

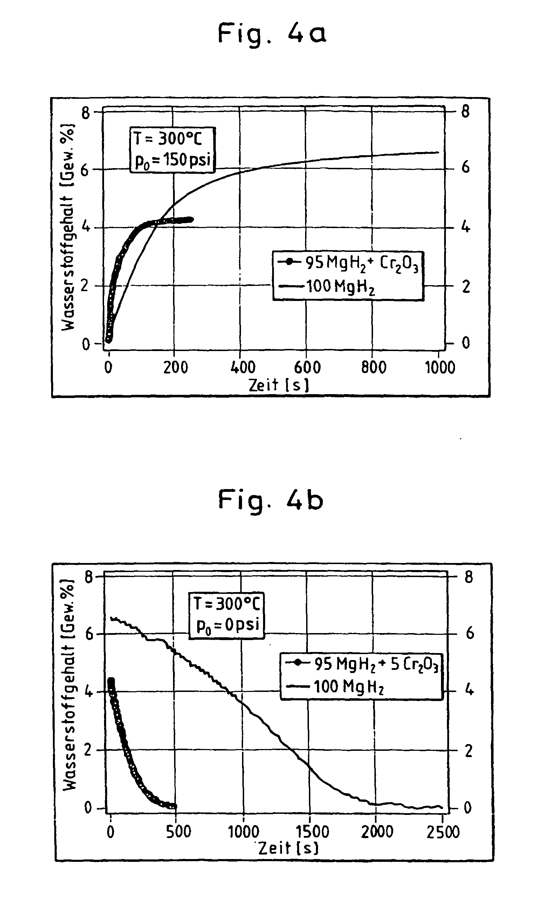

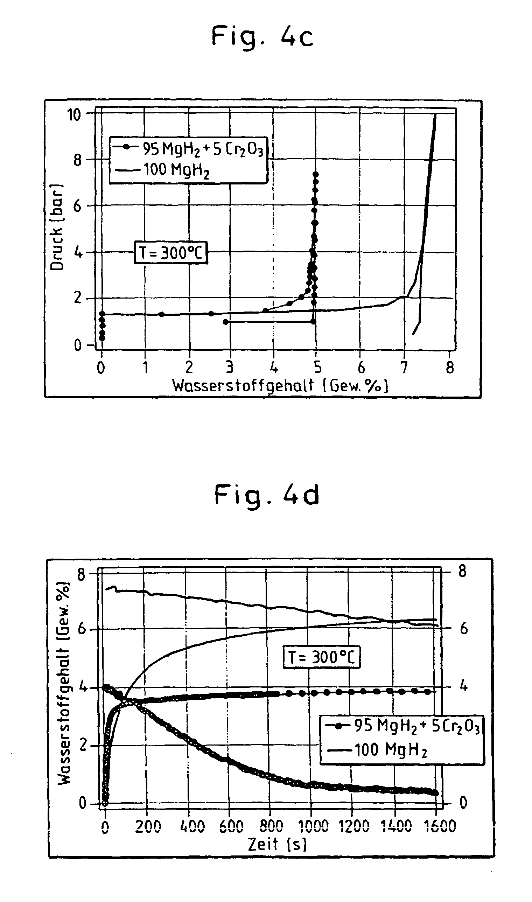

Gemäß Fig. 4a - d ist eine deutliche Verbesserung der Kinetik sowohl bei der Absorption von Wasserstoff wie auch bei dessen Desorption zu erkennen. Die dem gleichen Mahlprozeß unterzogenen Proben besitzen unterschiedliche Gesamtkapazitäten an Wasserstoff. 95 MgH₂ + 5 Cr₂O₃ kann 5 gew. % und 100 MgH₂ kann 7,6 gew. % Wasserstoff speichern. Dieses ist in den PCT-Diagrammen (Fig. 4c) wiedergegeben. Fig. 4a zeigt einer Erhöhung der Absorptionsgeschwindigkeit bei T=300°C um den Faktor 10. Bei einer Desorption wird bei gleicher Temperatur ein Geschwindigkeitsvorteil mit einem Faktor 6 erzielt (Fig. 4b). Das Material läßt sich bei T=250°C nach ca. 1200 s vollständig dehydrieren, wenn der Katalysator Cr₂O₃ hinzugegeben wird (Fig. 4d). Reines MgH₂ läßt sich bei T=250°C innerhalb moderater Zeiten nicht dehydrieren.

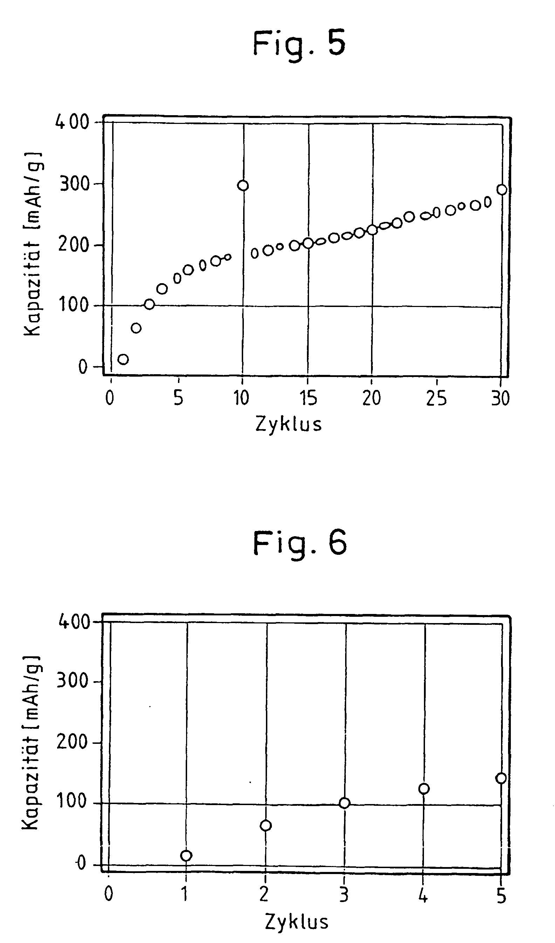

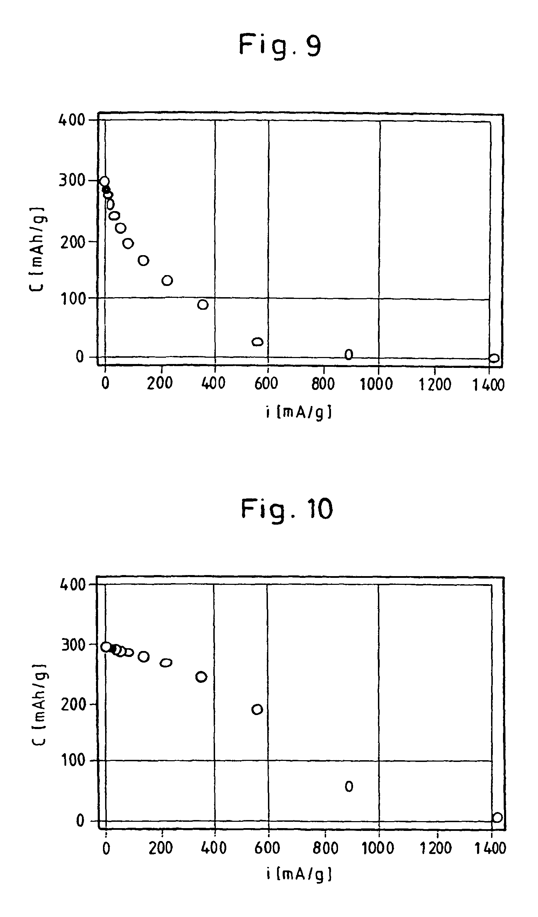

Unter Bezugnahme auf die Figuren 5 bis 12 ist ersichtlich, daß durch die erfindungsgemäß erreichbare Beschleunigung der Wasserstoffaufnahme und -abgabe in den Speicherwerkstoff der Elektrode (Anode) des Akkumulators sowie des Herstellungsverfahrens gemäß der Erfindung die Leistungsdichte und die Stromdichte des Akkumulators mit dem erfindungsgemäß katalysierten Elektrodenwerkstoff im Vergleich zu herkömmlichen Akkumulatoren deutlich erhöht wird. Damit sind die erfindungsgemäß herstellbaren Akkumulatoren für Hochleistungsanwendungen geeignet, die bisher nur Ni-Cd-Elementen auf bzw. -Zellen vorbehalten waren, siehe auch oben Forderungskritierium 6. Zudem können Speicherwerkstoffe für die Elektrode verwendet werden, deren Gleichgewichtsdruck bei den Anwendungsbedingungen geringer ist und die stabilere Hydride als die bisher üblichen ausbilden. Dadurch werden geringere Selbstentladungsraten erzielt, siehe oben Anforderungskriterium 6. Die durch die erfindungsgemäßen Katalysationsmittel erzielbare Beschleunigung der Kinetik kompensiert dabei den Verlust an thermodynamisch treibender Kraft zur Hydrierung/Dehydrierung des Elektrodenwerkstoffs, so daß trotz der größeren Stabilität des Hydrids noch ausreichende Stromdichten für die Anwendung erreicht werden. Die erfindungsgemäßen oxidischen Katalysationsmittel bzw. Katalysationszusätze sind wesentlich preisgünstiger herstellbar bzw. bereitstellbar als die bisher zur Anwendung gelangten Metalle, siehe oben Anforderungskriterium 8. Die bisher übliche Aktivierungsprozedur des Elektrodenwerkstoffs entfällt bei der erfindungsgemäßen Herstellung des metallhaltigen Elektrodenwerkstoffs, siehe oben Anforderungskriterium 5.

Aus den Figuren 5 bis 12 ist ersichtlich, daß das Lade- und Entladeverhalten des Elektrodenwerkstoffs gemäß der Erfindung gegenüber dem entsprechenden Verhalten der bisher bekannten Elektrodenwerkstoffe außerordentlich große Vorteile und Verbesserungen zeigt.

Es ist grundsätzlich möglich den erfindungsgemäßen Elektrodenwerkstoff auch für Elektroden von nichtwiederaufladbaren aber ggf. regenerierbaren Primärelementen bzw. -zellen zu verwenden.

## Patentansprüche

1. Metallhaltiger Elektrodenwerkstoff als hydridbildender Werkstoff für Primär- und Sekundärelemente, wobei dieser zur Hydrierung oder Dehydrierung des Elektrodenwerkstoffs wenigstens ein Metalloxid als Katalysationsmittel enthält und wobei das Metall des Metalloxids Mg, Ca, Ti, V, Cr, Mn, Fe, Co, Ni, Cu, Zn, Zr, Nb, Mo, Sn, Hf, Ta und W ist und der Anteil des Metalloxids im Elektrodenwerkstoff von 1 Gew. % bis 10 Gew. % beträgt.

2. Metallhaltiger Elektrodenwerkstoff nach Anspruch 1, **dadurch gekennzeichnet, daß** das Metalloxid ein Mischoxid ist.

3. Metallhaltiger Elektrodenwerkstoff nach einem oder beiden der Ansprüche 1 oder 2, **dadurch gekennzeichnet, daß** dieser eine nanokristalline Struktur aufweist.

4. Metallhaltiger Elektrodenwerkstoff nach einem oder mehreren der Ansprüche 1 bis 3, **dadurch gekennzeichnet, daß** das Katalysationsmittel eine nanokristalline Struktur aufweist.

5. Verfahren zur Herstellung eines metallhaltigen Elektrodenwerkstoffs als hydridbildender Werkstoff für Primär- und Sekundärelemente, wobei ein metallhaltiger Werkstoff und/oder ein Katalysationsmittel, das wenigstens ein Metalloxid ist, und wobei das Metall des Metalloxids Mg, Ca, Ti, V, Cr, Mn, Fe, Co, Ni, Cu, Zn, Zr, Nb, Mo, Sn, Hf, Ta und W ist, zum Erhalt eines Metallpulvers derart einem mechanischen Mahlvorgang unterworfen wird bzw. werden, daß der metallhaltige Werkstoff und/oder das Katalysationsmittel eine nanokristalline Struktur erhält bzw. erhalten.

6. Verfahren nach Anspruch 5, **dadurch gekennzeichnet, daß** der Mahlvorgang eine vorbestimmte Zeit lang durchgeführt wird.

7. Verfahren nach einem oder beiden der Ansprüche 5 oder 6, **dadurch gekennzeichnet, daß** der metallhaltige Werkstoff zunächst dem Mahlvorgang unterworfen wird und nachfolgend ebenfalls das Katalysationsmittel.

8. Verfahren nach einem oder beiden der Ansprüche 5 oder 6, **dadurch gekennzeichnet, daß** das Katalysationsmittel zunächst dem Mahlvorgang unterworfen wird und nachfolgend ebenfalls der metallhaltige Werkstoff.

9. Verfahren nach einem oder mehreren der Ansprüche 5 bis 8, **dadurch gekennzeichnet, daß** der Mahlvorgang unter einer Inertgasatmosphäre durchgeführt wird.

10. Verfahren nach Anspruch 9, **dadurch gekennzeichnet, daß** das Inertgas Argon ist.

11. Verfahren nach einem oder mehreren der Ansprüche 5 bis 10, **dadurch gekennzeichnet, daß** die Dauer des Mahlvorganges im Bereich von etwa 1 bis 200 Stunden liegt.

12. Verfahren zur Herstellung eines metallhaltigen Elektrodenwerkstoffs als hydridbildender Werkstoff für Primär- und Sekundärelemente nach einem oder mehreren der Ansprüche 1 bis 4, **dadurch gekennzeichnet, daß** wenigstens ein Metalloxid wenigstens auf der Oberfläche des Elektrodenwerkstoffs in situ durch Kontakt mit Sauerstoff aus Elementen des Elektrodenwerkstoffs oder durch direkte Zufuhr gebildet wird.

13. Verfahren nach Anspruch 12, **dadurch gekennzeichnet, daß** die Oberfläche des Elektrodenwerkstoffs vor Ausbildung des Oxids chemisch aktiviert wird.

14. Verfahren nach Anspruch 13, **dadurch gekennzeichnet, daß** die Oberfläche des Elektrodenwerkstoffs vor Ausbildung des Oxids mechanisch aktiviert wird.

## Claims

1. A metalliferous electrode material as a hybrid-forming material for primary and secondary cells, wherein for the hydrogenation or dehydrogenation of the electrode material it contains at least one metal oxide as the catalysing agent, and wherein the metal of the metal oxide is Mg, Ca, Ti, V, Cr, Mn, Fe, Co, Ni, Cu, Zn, Zr, Nb, Mo, Sn, Hf, Ta and W and the percentage of metal oxide in the electrode material is from 1 % by weight to 10 % by weight.

2. A metalliferous electrode material according to Claim 1,
**characterised in that** the metal oxide is a mixed oxide.

3. A metalliferous electrode material according to one or both of Claims 1 or 2,
**characterised in that** it comprises a nanocrystalline structure.

4. A metalliferous electrode material according to one or more of Claims 1 to 3,
**characterised in that** the catalysing agent comprises a nanocrystalline structure.

5. A method for the manufacture of a metalliferous electrode material as a hybrid-forming material for primary and secondary cells, whereby a metalliferous material and/or a catalysing agent, which is at least one metal oxide, and whereby the metal of the metal oxide is Mg, Ca, Ti, V, Cr, Mn, Fe, Co, Ni, Cu, Zn, Zr, Nb, Mo, Sn, Hf, Ta and W, is or are subjected to a mechanical grinding operation for obtaining a metal powder in such a manner that the metalliferous material and/or the catalysing agent obtains or obtain a nanocrystalline structure.

6. A method according to Claim 5,
**characterised in that** the grinding operation is carried out for a predetermined time.

7. A method according to one or both of Claims 5 or 6,
**characterised in that** firstly the metalliferous material and subsequently also the catalysing agent are subjected to the grinding operation.

8. A method according to one or both of Claims 5 or 6,
**characterised in that** firstly the catalysing agent is and subsequently also the metalliferous material are subjected to the grinding operation.

9. A method according to one or more of Claims 5 to 8,
**characterised in that** the grinding operation is performed under an inert gas atmosphere.

10. A method according to Claim 9,
**characterised in that** the inert gas is argon.

11. A method according to one or more of Claims 5 to 10,
**characterised in that** the duration of the grinding operation lies in the range of roughly 1 to 200 hours.

12. A method for the manufacture of a metalliferous electrode material as a hybrid-forming material for primary and secondary cells according to one or more of Claims 1 to 4,
**characterised in that** at least one metal oxide is formed at least on the surface of the electrode material in situ by contact with oxygen from cells of the electrode material or by direct supply.

13. A method according to Claim 12,
**characterised in that** the surface of the electrode material is chemically activated prior to the formation of the oxide.

14. A method according to Claim 13,
**characterised in that** the surface of the electrode material is mechanically activated prior to the formation of the oxide.

## Revendications

1. Matériau d'électrode métallique, en tant que matériau formant des hybrides pour des éléments primaires et secondaires, celui-ci contenant au moins un oxyde métallique à titre d'agent catalytique pour l'hydrogénation ou la déshydrogénation du matériau d'électrode et le métal de l'oxyde métallique étant Mg, Ca, Ti, V, Cr, Mn, Fe, Co, Ni, Cu, Zn, Zr, Nb, Mo, Sn, Hf, Ta et W et la proportion de l'oxyde métallique dans le matériau d'électrode étant de 1 % en poids à 10 % en poids.

2. Matériau d'électrode métallique selon la revendication 1, **caractérisé en ce que** l'oxyde métallique est un oxyde mixte.

3. Matériau d'électrode métallique selon une ou les deux revendications 1 ou 2, **caractérisé en ce que** celui-ci présente une structure nanocristalline.

4. Matériau d'électrode métallique selon une ou plusieurs des revendications 1 à 3, **caractérisé en ce que** l'agent catalytique présente une structure nanocristalline.

5. Procédé de fabrication d'un matériau d'électrode métallique en tant que matériau formant des hybrides pour les éléments primaires et secondaires, dans lequel un matériau métallique et/ou un agent catalytique, qui est au moins un oxyde métallique, et dans lequel le métal de l'oxyde métallique est Mg, Ca, Ti, V, Cr, Mn, Fe, Co, Ni, Cu, Zn, Zr, Nb, Mo, Sn, Hf, Ta et W, est ou sont soumis à un procédé de broyage mécanique pour l'obtention d'une poudre métallique, de manière à ce que le matériau métallique et/ou l'agent catalytique obtienne(nt) une structure nanocristalline.

6. Procédé selon la revendication 5, **caractérisé en ce que** le procédé de broyage est effectué pendant une durée prédéterminée.

7. Procédé selon une ou deux des revendications 5 ou 6, **caractérisé en ce que** le matériau métallique est d'abord soumis à un procédé de broyage et ensuite, le cas échéant, également l'agent catalytique.

8. Procédé selon l'une ou les deux des revendications 5 et 6, **caractérisé en ce que** l'agent catalytique est d'abord soumis à un procédé de broyage et ensuite, le cas échéant, également le matériau métallique.

9. Procédé selon une ou plusieurs des revendications 5 à 8, **caractérisé en ce que** le procédé de broyage est réalisé sous atmosphère de gaz inerte.

10. Procédé selon la revendication 9, **caractérisé en ce que** le gaz inerte est l'argon.

11. Procédé selon une ou plusieurs des revendications 5 à 10, **caractérisé en ce que** la durée du procédé de broyage se situe dans l'intervalle allant d'environ 1 à 200 heures.

12. Procédé de fabrication d'un matériau d'électrode métallique à titre de matériau formant des hybrides pour les éléments primaires et secondaires selon une ou plusieurs des revendications 1 à 4, **caractérisé en ce qu'**au moins un oxyde métallique est formé in situ au moins sur la surface du matériau d'électrode par contact avec l'oxygène à partir d'éléments du matériau d'électrode ou par apport direct.

13. Procédé selon la revendication 12, **caractérisé en ce que** la surface du matériau d'électrode est activée chimiquement avant la formation de l'oxyde.

14. Procédé selon la revendication 13, **caractérisé en ce que** la surface du matériau d'électrode est activée mécaniquement avant la formation de l'oxyde.
